# EUROPEAN PATENT SPECIFICATION

(11) **EP 0 766 127 B1**
(45) Date of publication and mention of the grant of the patent: **20.03.2002**
(21) Application number: 96306776.4
(22) Date of filing: 18.09.1996
(51) Int. Cl.: G03B 27/46, G03D 15/00

(54) **Photographic printing method**
Photographisches Kopierverfahren
Procédé de tirage photographique

(30) Priority: 27.09.1995 JP 24898595
(43) Date of publication of application: 02.04.1997
(73) Proprietor: NORITSU KOKI CO., LTD., Wakayama-shi, Wakayama (JP)
(72) Inventor: Akira, Toshiro, Wakayama-shi, Wakayama 640 (JP); Yokohama, Muneki, Wakayama-shi, Wakayama 640 (JP); Iso, Kazushige, Wakayama-shi, Wakayama 640 (JP); Masuda, Takeshi, Wakayama-shi, Wakayama 640 (JP)
(74) Representative: Hillier, Peter

(56) References cited:
- US-A- 4 627 719
- US-A- 5 420 699

## Description

### BACKGROUND OF THE INVENTION

The present invention relates to a method of producing photographic prints from a plurality of negative film pieces separated from a negative film, each carrying a given number of frames.

Most of photographic films carrying pictures are commonly requested for a combination of development and printing. More specifically, a negative film carrying e.g. 36 frames and subjected to development is loaded in its order or full length in to a photographic printing apparatus where each frame is printed on a sheet of printing paper. After the printing, the full length of the negative film is separated into pieces, each carrying a given number (namely six) of frames, which are then stored in a negative film pouch and returned back to a client together with their prints.

As the full length of the negative film has been separated into a number of pieces, the negative film pieces are given and set on the photographic printing apparatus for extra printing.

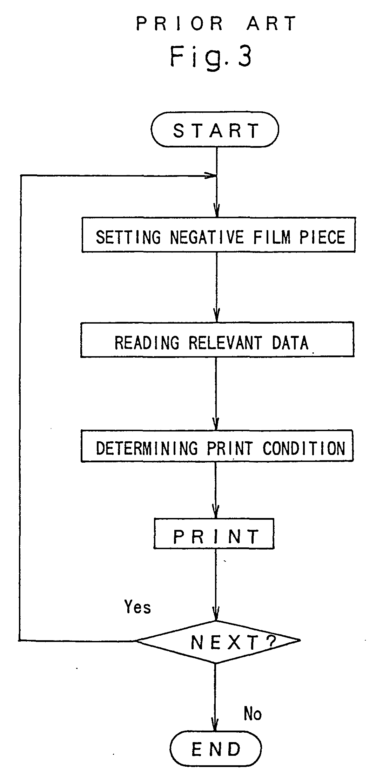

A conventional procedure of printing desired frames of the negative film pieces in a photographic printing apparatus will be explained referring to a flowchart of Fig.3.

The procedure starts with taking out from a film pouch one of the negative film pieces including a target frame to be printed and placing the photographic printing apparatus.

The negative film piece is fed into the photographic printing apparatus and scanned for reading relevant data of each frame such as image density and balance between three primary colors in a distribution.

The relevant data are then used for determining the print condition of each target frame to be printed.

The printing of the target frame on a sheet of printing paper is conducted according to the print condition which determines the image density and the distribution balance between the three primary colors.

The negative film piece after printing is discharged from the photographic printing apparatus and allows a succeeding negative film piece carrying another target frame to be loaded into the photographic printing apparatus for repeating the above procedure. Problems that the Invention is to solve

In the conventional method, the negative film pieces are subjected one at a time to a series of the data reading, print condition determining, and printing actions in the photographic printing apparatus. When each of the negative film pieces has at least one target frame to be printed, a standby time between any two actions of the photographic printing apparatus is increased hence declining the operating efficiency.

Also, the conventional method demands that an operator should handle and subject the negative film pieces one at a time to the data reading, print condition determining, and printing actions of the photographic printing apparatus. Accordingly, the handling becomes troublesome and may lead to printing error.

The relevant data scanned for determining the print condition of a frame is derived from at best a limited number (for example, six) of the frames of each negative film piece and provides less information than that from the frames (36 frames) of the full length of a negative film thus producing a lower level of the print condition. As the result, the quality of extra prints will hardly be equal to that of the primary prints.

It is an object of the present invention, in view of the foregoing problem to provide a photographic printing method in which a plurality of negative film pieces of one order lot including target frames to be printed are handled at higher efficiency and without a handling error.

It is another object of the present invention to provide a phtographic printing method capable of determining the print condition of such a high accuracy for producing e.g. extra prints from negative film pieces that the quality of the extra prints is equal to that of the primary prints.

US-A-4627719 discloses a photographic printing method of producing prints from a plurality of negative film pieces separated from a negative film, each carrying a given number of frames, in a photographic printing apparatus which includes a data reading means for reading relevant data from the negative film, a print condition determining means for determining print conditions from the relevant data read by the data reading means, and a printing means for printing images on a sheet of printing paper according to the print conditions determined by the print condition determining means.

The invention is characterised by receiving a plurality of separate negative film pieces from a single film and performing a first step of reading the relevant data from the plural negative pieces supplied in a sequence to the data reading means; a second step of determining the print condition of at least one target frame, from a combination of the frame data for the or each target frame and the average of all the print data read in the first step; and a third step of printing the or each target frame of the negative film pieces supplied in a sequence to the printing means according to the print conditions determined in the second step; wherein each of the stages is performed on the plurality of separate film pieces of the film in succession before performing the next step.

The invention will now be described in more detail and by way of example only, with reference to the accompanying drawings, in which:
Figure 1 is a flow chart explaining a photographic printing method of the invention;
Figure 2 is a schematic representation of the photographic printing apparatus enabling the photographic printing method of the present invention; and
Figure 3 is a flow chart explaining a photographic printing method of a prior art method.

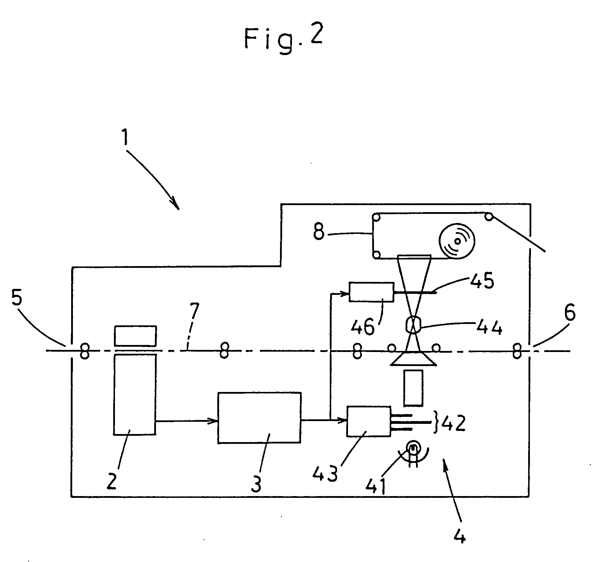

As shown in figure 2, a photographic printing apparatus 1 comprises a data reading means 2 for reading and acknowledging data about a negative film, a print condition determining means 3 for determining print conditions in response to the data read by the data reading means 2, and a printing means 4 for printing images on a sheet of printing paper according to the print conditions determined by the print condition determining means 3.

There are also shown a negative film inlet 5, a negative film outlet 6, a negative film transfer passage 7 extending from the inlet 5 to the outlet 6, and a sheet of printing paper 8. The printing means 4 includes a light source 41, a light modulator filter 42 for three, cyan, magenta, and yellow, primary colors, a lens unit 44, a shutter 45, and a controller 46 for the shutter 45.

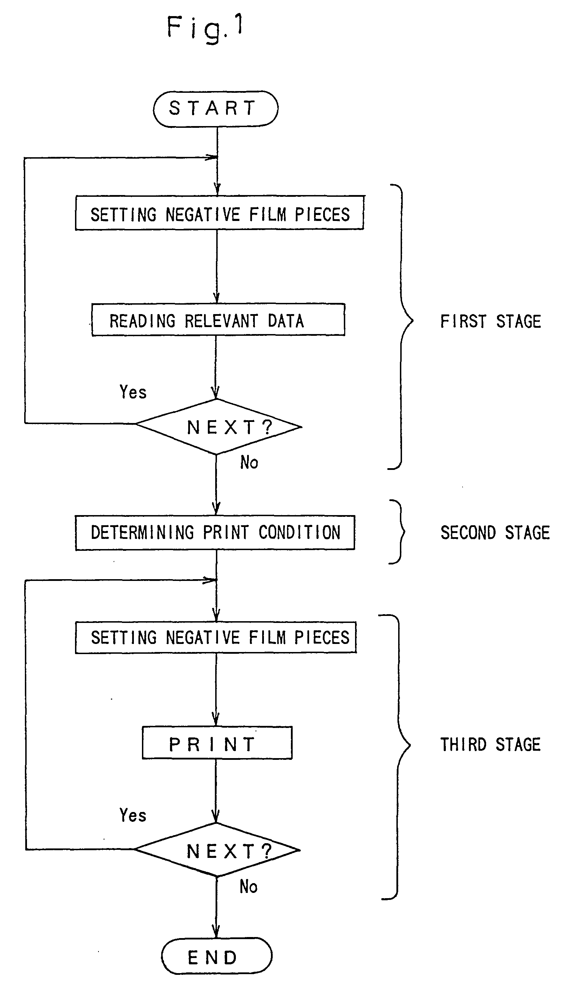

A procedure of printing photo prints from negative film pieces in the photographic printing apparatus 1 will be explained referring to Fig.1.

The procedure starts with a first stage where a negative film piece including a desired frame(s) to be printed is taken out from a negative film pouch and placed at the inlet 5 of the photographic printing apparatus 1.

The negative film piece is then introduced into the photographic printing apparatus 1 and conveyed to the data reading means 2 where all frames on the negative film piece are scanned for reading relevant data including image density and balance between the three primary colors in a distribution.

The negative film piece after scanned is discharged from the outlet 6 of the photographic printing apparatus 1 which thus allows a succeeding negative film piece to be set. If the succeeding negative film piece including another target frame is required for printing, it is placed at the inlet 5, conveyed, and scanned. As the negative film pieces including the target frames in one order lot have been scanned, the procedure goes to a second stage.

At the second stage, the print conditions are determined at the print condition determining means 3. More particularly, the average is calculated from, for example, readings of the image density and the balance between the three primary colors in a distribution of all the target frames scanned at the first stage and compared with the reading of each target frame for determining the print condition of the target frame.

This is followed by a third stage where the negative film pieces including the target frames are placed again at the inlet 5 of the photographic printing apparatus 1 in a sequence equal to that of the first stage.

The negative film pieces are then infed and conveyed to the printing means 4 in the photographic printing apparatus 1. The printing means 4 controls the shutter 45 and the light modulator filter 42 according to the printing conditions determined at the second stage 2 so that the image density and distribution balance between the three primary colors are optimized, and prints down the targets frames in the sequence on the printing paper sheet 8.

One of the negative film pieces after printing is discharged from the outlet 6 of the photographic printing apparatus 1 and returned back to their pouch. Then, another placed at the inlet 5 is infed and subjected to the printing procedure. After the printing of the negative film pieces including the target frames in the order lot is completed, the procedure is terminated.

In the photographic printing method of the present invention, the first stage allows a number of the negative film pieces including target frames in one order lot to be scanned for reading their relevant data, the second stage determines the print conditions of the target frames respectively, and the third stage performs printing of all the negative film pieces. Therefore, the method will minimize the standby time between any two actions of the photographic printing apparatus and increase the operating efficiency for one order lot of the negative film pieces, as compared with the conventional method in which the negative film pieces are subjected one at a time to a series of the data reading, print condition determining, and printing actions.

Also, the method allows the operator of the photographic printing apparatus to subject one order lot of the negative film pieces as a whole to the data reading action of the first stage, the print condition determining action of the second stage, and the printing action of the third stage. Hence, the handling error will be minimized because the troublesome process of the conventional method in which the negative film pieces are subjected one at a time to a series of the data reading, print condition determining, and printing actions is eliminated. Although the first stage of the photographic printing method allows a selected number of the negative film pieces carrying target frames to be set at the inlet 5 and conveyed to the data reading means 2, all the negative film pieces of one order lot separated from the full length of a film may be supplied to the data reading means 2 regardless of including the target frames or not.

If two of the negative film pieces out of one order lot carry target frames, the print condition determining action of the second stage is conducted with data from the total frames (e.g. 12 frames) of the two film pieces. This may provide a lower level of the print condition than that from the full frames (e.g. 36 frames) of one order lot.

When all the negative film pieces of the order lot are subjected to the data reading action of the data reading means 2 in the first stage, the print condition determining action of the second stage is effected with data of the full or 36 frames and thus produces a higher level of the print condition for extra prints equivalent to that for the primary prints. As the result, the extra prints will be equal in quality to the primary prints.

It is also a good idea that while the third stage of the present method allows the negative film pieces to be set at the inlet 5 of the photographic apparatus 1 in the same order as in the first stage, any setting in an erratic order is indicated by an error signal produced by the photographic printing apparatus 1 or a means for automatically assigning the print conditions to their respective film pieces set in any order is provided in the photographic printing apparatus 1.

## Claims

1. A photographic printing method of producing prints from a plurality of negative film pieces separated from a negative film, each carrying a given number of frames, in a photographic printing apparatus (1) which includes a data reading means (2) for reading relevant data from the negative film, a print condition determining means (3) for determining print conditions from the relevant data read by the data reading means (2), and a printing means (4) for printing images on a sheet of printing paper according to the print conditions determined by the print condition determining means (3), **characterised by**
receiving a plurality of separate negative film pieces from a single film and performing:
a first step of reading the relevant data from the plural negative pieces supplied in a sequence to the data reading means (2);
a second step of determining the print condition of at least one target frame, from a combination of the frame data for the or each target frame and the average of all the print data read in the first step; and
a third step of printing the or each target frame of the negative film pieces supplied in a sequence to the printing means (4) according to the print conditions determined in the second step;
wherein each of the steps is performed on the plurality of separate film pieces of the film in succession before performing the next step.

2. A photographic printing method according to claim 1, wherein the first step allows all the negative film pieces of one order lot separated from one single film to be supplied to the data reading means.

## Patentansprüche

1. Fotografisches Druckverfahren für die Herstellung von Abzügen von einer Vielzahl von Negativfilmstreifen, die von einem Negativfilm abgeschnitten worden sind und jeweils eine gegebene Anzahl von Einzelbildern tragen, in einer fotografischen Druckvorrichtung (1), die folgendes einschließt: ein Datenlesemittel (2) zum Lesen der relevanten Daten aus dem Negativfilm, ein Druckbedingungen-Bestimmungsmittel (3) zur Bestimmung der Druckbedingungen anhand der relevanten Daten, die von dem Datenlesemittel (2) gelesen worden sind, und ein Druckmittel (4) zum Drucken von Bildern auf einen Bogen Kopierpapier entsprechend der Druckbedingungen, die durch das Druckbedingungen-Bestimmungsmittel (3) bestimmt worden sind, **gekennzeichnet durch** die
Aufnahme einer Vielzahl von getrennten Negativfilmstreifen von einem einzelnen Film und die Durchführung folgendes:
eines ersten Schritts des Lesens der relevanten Daten aus der Vielzahl von Negativstreifen, die nacheinander dem Datenlesemittel (2) zugeführt werden;
eines zweiten Schritts der Bestimmung der Druckbedingungen von wenigstens einem Ziel-Einzelbild aus einer Kombination der Einzelbilddaten für das oder jedes Ziel-Einzelbild und dem Durchschnitt all der Druckdaten, die im ersten Schritt gelesen worden sind, und
eines dritten Schritts des Druckens des oder jedes Ziel-Einzelbildes der Negativfilmstreifen, die nacheinander dem Druckmittel (4) zugeführt werden, entsprechend der Druckbedingungen, die im zweiten Schritt bestimmt worden sind,
wobei jeder der Schritte an der Vielzahl der getrennten Filmstreifen des Filmes nacheinander ausgeführt wird, bevor der nächste Schritt ausgeführt wird.

2. Fotografisches Druckverfahren nach Anspruch 1, bei dem der erste Schritt die Zuführung aller Negativfilmstreifen eines Auftragsposten, die von einem einzelnen Film abgetrennt worden sind, zu dem Datenlesemittel erlaubt.

## Revendications

1. Procédé de tirage photographique pour produire des épreuves à partir de plusieurs pièces de film négatif séparées d'un film négatif, supportant chacune un nombre défini d'images, dans un appareil de tirage photographique (1) englobant un moyen de lecture des données (2) pour lire les données correspondantes du film négatif, un moyen de détermination des conditions de tirage (3) pour déterminer les conditions de tirage sur la base des données correspondantes lues par le moyen de lecture des données (2), et un moyen de tirage (4) pour tirer des images sur une feuille de papier d'impression en fonction des conditions de tirage déterminées par le moyen de détermination des conditions de tirage (3), **caractérisé par**
la réception de plusieurs pièces de film négatif séparées à partir d'un seul film, et par l'exécution:
d'une première étape de lecture des données correspondantes des plusieurs pièces de film négatif amenées de manière séquentielle vers le moyen de lecture des données (2);
d'une deuxième étape de détermination des conditions de tirage d'au moins une image cible sur la base d'une combinaison de données d'image pour l'image cible ou pour chaque image cible et de la moyenne de toutes les données de tirage lues au cours de la première étape; et
d'une troisième étape de tirage de l'image cible ou de chaque image cible des pièces de film négatif amenées de manière séquentielle vers le moyen de tirage (4) en fonction des conditions de tirage déterminées au cours de la deuxième étape;
chacune des étapes étant exécutée successivement pour les plusieurs pièces de film séparées avant l'exécution de l'étape suivante.

2. Procédé de tirage photographique selon la revendication 1, dans lequel la première étape permet l'amenée de toutes les pièces de film négatif d'un lot d'ordre séparées d'un seul film vers le moyen de lecture des données.
